# EUROPÄISCHE PATENTSCHRIFT

(11) **EP 1 265 186 B1**
(45) Veröffentlichungstag und Bekanntmachung des Hinweises auf die Patenterteilung: **06.04.2005**
(21) Anmeldenummer: 02011118.3
(22) Anmeldetag: 18.05.2002
(51) Int. Cl.: G06K 7/10, G06K 7/08, G06K 7/00

(54) **Schreib-/Lesegerät für eine Ausweis- oder Kreditkarte vom RFID-Typ**
Reading and writing device for an identity or credit card of the RFID type
Dispositif de lecture/écriture pour une carte d'identité ou carte de crédit du type d'identification par radiofréquences

(30) Priorität: 06.06.2001 DE 10127511
(43) Veröffentlichungstag der Anmeldung: 11.12.2002
(73) Patentinhaber: Wincor Nixdorf International GmbH, 33106 Paderborn (DE)
(72) Erfinder: Baitz, Guenter, 13629 Berlin (DE); Burchart, Joachim, 33189 Schlangen (DE)

(56) Entgegenhaltungen:
- EP-A- 0 712 087
- WO-A-97/46964

## Beschreibung

Die Erfindung betrifft ein Schreib-/Lesegerät für eine Ausweis- oder Kreditkarte vom RFID-Typ. Karten dieser Art sind im allgemeinen mit einer auf eine bestimmte Frequenz abgestimmten Sende-/Empfangseinrichtung ausgestattet, die mit einer in die Karte eingelassenen meist spulenförmigen Antenne ausgestattet sind. Die Sende-/Empfangseinrichtung ist wenigstens mit einem ebenfalls in der Karte angeordneten Speicherchip verbunden. Wird die Karte einem elektromagnetischen Feld der bestimmten Frequenz ausgesetzt, so wird der Inhalt des Speichers ausgelesen, oder bei entsprechender Modulation des elektromagnetischen Feldes mit Informationen beschrieben.

Mit Kontakten versehene Chipkarten werden in Einsteck-Kartengeräten gelesen und beschrieben, da ein auf einer Kartenseite angeordnetes Kontaktierungsfeld sehr genau in Bezug zu einem im Kartengerät befindlichen Kontaktfeld ausgerichtet werden muß. Nachteilig an diesen Einsteck-Kartengeräten ist aber, daß ein Kartenbenutzer seine Karte aus der Hand geben muß. Seit aber Versuche bekannt geworden sind, solche Einsteck-Kartengeräte in unberechtigter Weise mit Zusatzeinrichtungen zu versehen, die eine Rückgabe der Karte an den rechtmäßigen Eigentümer verhindern sollten, mit dem Ziel, die Karte in die Hände Unbefugter zu bringen, bestehen in Benutzerkreisen gegen Einsteckleser gewisse Vorbehalte.

Kontaktlose Ausweis- oder Kreditkarten, sogenannte RFID-Karten, minimieren diese Gefahr, da sie bei der Benutzung in der Hand des Benutzers bleiben. Eine solche Karte wird durch das elektromagnetische Feld einer irgendwo hinter einer Wand eines mit der Karte zu steuernden Gerätes, beispielsweise eines Geldautomaten angeordneten Sende-/Empfangseinrichtung geführt und dabei ausgelesen bzw. beschrieben. Dabei besteht das Problem, daß der Benutzer -abhängig von der Gestaltung des zu steuernden Gerätes- oft nicht genau weiß an welcher Stelle hinter der Wand sich die Sende-/Empfangseinrichtung befindet und in welcher Entfernung die Karte an dieser vorbeigeführt werden muß. Es können deshalb mehrere Versuche erforderlich sein, bis ein fehlerfreies Ergebnis erzielt wird. Ein weiterer Nachteil ist darin zu sehen, daß im aktiven Bereich der Sende-/Empfangseinrichtung leicht eine Antenne einer weiteren Empfangseinrichtung angeordnet werden kann, die den Informationsaustausch zwischen der Karte und der Sende-/Empfangseinrichtung "mithören" kann.

Aus der WO-A-92/09971 ist ein Durchzugleser für Magnetstreifenkarten bekannt. Dieser hat einen durch Seitenwände und den Schlitzgrund begrenzten Schlitz. Durch eine Seitenwand ragt ein in Richtung auf die Schlitzmitte mit der Kraft einer Feder beaufschlagter Schreib-/Lesekopf für einen Magnetstreifen in den Schlitz hinein.

In der EP 0 712 087 ist ein motorische betriebener Einzugsleser für Magnetkarten sowie für kontaktbehaftete und kontaktlose Chipkarten beschrieben, der über drei entsprechende Bearbeitungsstationen verfügt.

Aus der WO-A-97/46964 ist ein Einsteckleser für Chipkarten bekannt, der über zwei Bearbeitungsstationen zum Bearbeiten von kontaktbehafteten und kontaktlosen Chipkarten verfügt.

Es ist die Aufgabe der Erfindung, ein Schreib-/Lesegerät vom Typ eines manuellen Durchzugslesers für eine Ausweisoder Kreditkarte vom RFID-Typ vorzuschlagen, das eine genaue Positionierung der Karte bezüglich der Sende-/Empfangseinrichtung erlaubt.

Die Aufgabe wird durch die Merkmale des Anspruchs 1 gelöst.

Die Ausbildung des Schreib-/Lesegerätes für eine Ausweisoder Kreditkarte vom RFID-Typ als Durchzugleser mit einem Schlitz für die Führung der Karte hat den Vorteil, daß der Benutzer sicher sein kann, daß er die Karte genau dort entlang führt, wo sie auch gelesen und/oder beschrieben wird. Die Antennenspule der RF-Schreib-/Leseeinrichtung ist dabei derart parallel zu dem Schlitz angeordnet, daß deren elektromagnetisches Feld den Schlitz durchsetzt. Dadurch ist auch der Abstand der Karte zur Schreib-/Leseeinrichtung exakt definiert.

In besonders vorteilhafter Weise wird das dadurch erreicht, daß die Antennenspule der RF-Schreib-/Leseeinrichtung eine auf eine Trägerplatte aufgebrachte Flachspule ist, wobei die Trägerplatte flächenparallel zu einer Begrenzungswand des Schlitzes angeordnet ist.

Wenn, entsprechend einer bevorzugten Ausprägung der Erfindung, zusätzlich ein seitlich in den Schlitz ragender Schreib-/Lesekopf für einen Magnetstreifen vorgesehen wird, ist das Schreib-/Lesegerät auch für Magnetstreifenkarten oder für RFID-Karten mit zusätzlich aufgebrachtem Magnetstreifen geeignet. Solche Karten werden z.B. als Mitarbeiterausweise von Unternehmen oder Instituten ausgegeben. Eine vorzugsweise unveränderliche über RF auslesbare Information kann dabei als Zugangsberechtigung dienen, während mit Hilfe des Magnetstreifens irgendwelche Leistungen wie beispielsweise Kantinenessen gebucht und abgerechnet werden können.

Sollen größere Datenmengen von der RFID-Karte gelesen oder darin gespeichert werden, ist es von Vorteil, wenn in den Schlitz eine Bremsvorrichtung ragt. Das Durchziehen der Karte wird dabei erschwert, wodurch die Verweildauer der Karte in dem elektromagnetischen Feld der RF-Schreib-/Leseeinrichtung erhöht wird.

Die Bremsvorrichtung kann ein in Richtung der Schlitzmitte mit einer Federkraft beaufschlagtes Kissen oder eine zum Abrollen auf der Karte bestimmte schwergängige Rolle sein.

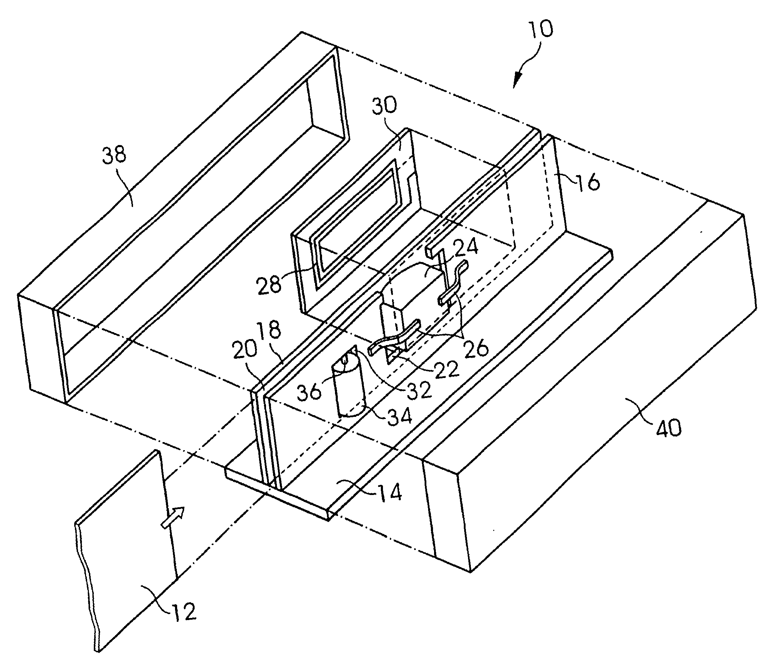

Nachfolgend wird die Erfindung an Hand eines in der folgenden Beschreibung und in der beigefügten Zeichnung dargestellten Ausführungsbeispiels erläutert. Es zeigt die einzige
- Figur: ein Schreib-/Lesegerät für eine Ausweis- oder Kreditkarte vom RFID-Typ in perspektivischer Explosionsdarstellung.

In der Zeichnung ist ein Schreib-/Lesegerät 10 für eine Ausweis- oder Kreditkarte 12 dargestellt. Das Schreib-/Lesegerät 10 ist als Durchzuggerät ausgebildet, welches sowohl für Karten vom RFID-Typ als auch für Magnetstreifenkarten geeignet ist. Es umfaßt eine Grundplatte 14, von der zwei voneinander beabstandete zueinander parallele Wände 16, 18 aufragen. Der Zwischenraum zwischen den Wänden 16, 18 bildet den Schlitz 20 des Durchzuggerätes, der Schlitzgrund wird von der Grundplatte 14 gebildet.

In die in der Figur rechte Wand 16 ist ein erster Durchbruch 22 eingebracht. Durch diesen hindurch ragt ein Schreib-/Lesekopf 24 für einen Magnetstreifen in den Schlitz 20 hinein. Er ist mit Hilfe zweier gekröpfter Blattfedern 26 derart an der Wand 16 befestigt, daß er elastisch gefedert an einer durch den Schlitz 20 geführten Karte 12 entlangzugleiten vermag.

An der dem Schlitz 20 abgewandte Seite der in der Figur linken Wand 18 ist eine Antennenspule 28 einer an sich bekannten und deshalb nicht weiter dargestellten RF-Schreib-/Leseeinrichtung angebracht. Die Antennenspule 28 ist als gedruckte Flachspule auf eine Trägerplatte 30 aufgebracht. Die Trägerplatte 30 ist flächenparallel zu der Wand 18 angeordnet.

In die rechte Wand 16 ist noch ein weiterer Durchbruch 32 eingebracht. Durch diesen hindurch ragt eine schwergängige Bremsrolle 34 in den Schlitz 20 hinein. Diese hat gegenüber der Oberfläche einer Karte 12 einen solchen Reibwert, daß sie von der durch den Schlitz 20 bewegten Karte in Drehung versetzt werden kann, andererseits ist sie aber auf ihrer Welle 36 so schwer drehbar, daß das Durchziehen der Karte verlangsamt wird. Die Verweildauer der Karte 12 in dem elektromagnetischen Feld der RF-Schreib-/Leseeinrichtung wird dadurch erhöht, so daß auch größere Datenmengen von der Karte 12 gelesen oder in diese eingespeichert werden können. Statt der Bremsrolle 34 kann auch ein in Richtung der Schlitzmitte mit einer Federkraft beaufschlagtes Kissen zum Einsatz kommen.

Auf die dem Schlitz 20 abgewandte Seite der Wand 16 bzw. 18 ist eine Kappe 38 bzw. 40 aufsetzbar, die die an der jeweiligen Wand angebrachten Baugruppen 24, 34 bzw. 30 überdeckt. Bestehen die Kappen aus Metall oder einem metallisierten Kunststoff, so dringt das elektromagnetische Feld der Karte 12 bzw. der RF-Schreib-/Leseeinrichtung nicht aus dem Schreib-/Lesegerät heraus und kann damit nicht unbefugt abgehört werden.

Das oben beispielhaft dargestellte Schreib-/Lesegerät 10 ist sowohl für Karten vom RFID-Typ als auch für Magnetstreifenkarten geeignet. Sollen lediglich Karten vom RFID-Typ gelesen und/oder beschrieben werden, kann der Schreib-/Lesekopf 24 selbstverständlich entfallen.

## Patentansprüche

1. Schreib-/Lesegerät (10) für eine Ausweis- oder Kreditkarte vom RFID-Typ (12), welches als manueller Durchzugleser mit einem Schlitz (20) für die Führung der Karte (12) ausgebildet ist, wobei eine Antennenspule (28) einer RF-Schreib-/Leseeinrichtung derart parallel zu dem Schlitz (20) angeordnet ist, dass deren elektromagnetisches Feld eine durch den Schlitz (20) geführte Karte (12) durchsetzt, wobei
eine Bremsvorrichtung (34) in den Schlitz (20) hineinragt.

2. Schreib-/Lesegerät nach Anspruch 1
**dadurch gekennzeichnet, dass** dessen Bremsvorrichtung ein in Richtung der Schlitzmitte mit einer Federkraft beaufschlagtes Kissen ist.

3. Schreib-/Lesegerät nach Anspruch 1
**dadurch gekennzeichnet, dass** dessen Bremsvorrichtung eine zum Abrollen auf der Karte (12) bestimmte schwergängige Rolle (34) ist.

4. Schreib-/Lesegerät nach einem der Ansprüche 1 bis 3
**dadurch gekennzeichnet, dass** seitlich in den Schlitz (20) ein Schreib-/Lesekopf (24) zur Bearbeitung für einen auf der Karte aufgebrachten Magnetstreifen hineinragt.

## Claims

1. Write/read appliance (10) for an identity or credit card of the RFID type (12), which is designed as a manual swipe reader with a slot (20) for guiding the card (12), an antenna coil (28) of an RF write/read device being arranged parallel to the slot (20) in such a way that its electromagnetic field permeates a card (12) guided through the slot (20), a braking apparatus (34) projecting into the slot (20).

2. Write/read appliance according to Claim 1,
**characterized in that** its braking apparatus is a pad to which a spring force is applied in the direction of the slot centre.

3. Write/read appliance according to Claim 1,
**characterized in that** its braking apparatus is a sluggish roller (34) intended for rolling on the card (12).

4. Write/read appliance according to one of Claims 1 to 3,
**characterized in that** a write/read head (24) for processing for a magnetic strip applied on the card projects laterally into the slot (20).

## Revendications

1. Appareil de lecture / d'écriture (10) pour une carte d'identification ou de crédit de type RFID (12), sous forme de lecteur à passage manuel comportant une fente (20) destinée à guider la carte (12), dans laquelle une bobine d'antenne (28) d'une installation de lecture / d'écriture radiofréquence est disposée parallèlement à la fente (20) de telle manière que son champ électromagnétique traverse une carte (12) guidée dans la fente (20), un dispositif de freinage (34) pénétrant dans la fente (20).

2. Appareil de lecture / d'écriture selon la revendication 1, **caractérisé en ce que** son dispositif de freinage est un coussin soumis à une force de ressort en direction du milieu de la fente.

3. Appareil de lecture / d'écriture selon la revendication 1, **caractérisé en ce que** son dispositif de freinage est un galet (34) difficile à déplacer qui roule sur la carte (12).

4. Appareil de lecture / d'écriture selon l'une des revendications 1 à 3, **caractérisé en ce qu'**une tête de lecture / d'écriture (24), destinée à traiter une bande magnétique appliquée sur la carte, pénètre latéralement dans la fente (20).
